**Europäisches Patentamt**

**European Patent Office**

**Office européen des brevets**

(19)

(11) Veröffentlichungsnummer: **0 302 398**
**B1**

# (12) EUROPÄISCHE PATENTSCHRIFT

(45) Veröffentlichungstag der Patentschrift:
09.05.90

(51) Int. Cl.⁵: **B60K 15/035, F02M 37/04**

(21) Anmeldenummer: 88112275.8

(22) Anmeldetag: 29.07.88

(54) **Vorrichtung zum Entgasen von Kraftstoff.**

(30) Priorität: 04.08.87 DE 3725773
04.08.87 DE 3725772

(43) Veröffentlichungstag der Anmeldung:
08.02.89 Patentblatt 89/6

(45) Bekanntmachung des Hinweises auf die Patenterteilung:
09.05.90 Patentblatt 90/19

(84) Benannte Vertragsstaaten:
ES FR GB IT SE

(56) Entgegenhaltungen:
DD-A- 38 484
DE-A- 2 425 111
DE-A- 2 724 840
DE-A- 2 804 550
DE-A- 2 804 551
DE-A- 3 602 155
DE-B- 1 280 006

(73) Patentinhaber: **AUDI AG,**
**Auto-Union-Strasse 1 Postfach 220,**
**D-8070 Ingolstadt(DE)**

(72) Erfinder: **Humpl, Josef, Schwemmplatz 2,**
**D-8421 Hiendorf(DE)**
Erfinder: **Konrad, Johann, Am Anger 29,**
**D-8070 Ingolstadt(DE)**
Erfinder: **Sturm, Reinhold, Am Schanzl 35,**
**D-8071 Lenting(DE)**
Erfinder: **Attenni, Johann, Haydnstrasse 2,**
**D-8071 Pförring(DE)**

(74) Vertreter: **Le Vrang, Klaus, AUDI AG**
**Postfach 220 Patentabteilung I/EQP,**
**D-8070 Ingolstadt(DE)**

## Beschreibung

Die Erfindung betrifft eine Vorrichtung zum Entgasen von Kraftstoff in einem Kraftstoffbehälter, insbesondere für Kraftfahrzeuge, gemäß dem Oberbegriff des Patentanspruches 1.

Eine gattungsgemäße Vorrichtung ist der DE-A 2 804 550 entnehmbar. Dabei wird der vom Boden des Kraftstoffbehälters über eine Ansaugleitung angesaugte Kraftstoff in einen geodätisch hochliegenden Überlaufbehälter gefördert und wird von dort über einen weiteren Ansaugleitungsabschnitt dem Ansaugeinlauf der Kraftstoffpumpe zugeführt. In dem Überlaufbehälter ist ein Gasabscheidesieb angeordnet, welches in dem Überlaufbehälter ausgasende Gasbläschen zurückhalten soll. Hier besteht jedoch die Gefahr, daß aufgrund der erhöhten Strömungsgeschwindigkeit des Kraftstoffes durch das feinmaschige Sieb stromab des Siebes Gasbläschen entstehen, die die Förderleistung der Kraftstoffpumpe beeinträchtigen.

Eine weitere Vorrichtung zum Entgasen von Kraftstoff in einem Kraftstoffbehälter zeigt die DE-A 2 804 551, bei der in einer Ansaugleitung der Kraftstoffpumpe ein Speicherbehälter mit einem geodätisch hochliegendem Entlüftungsventil eingeschaltet ist. Auch in diesem Speicherbehälter ist ein eine Ausgasung gegebenenfalls bewirkendes Sieb stromab des Entlüftungsventiles angeordnet, welches wiederum in dem der Kraftstoffpumpe benachbarten Ansaugleitungsabschnitt Gasbläschen hervorruft und von dem Entlüftungsventil separiert.

Aufgabe der Erfindung ist es, eine Vorrichtung der gattungsgemäßen Art zu schaffen, die bei einfachem und funktionssicherem Aufbau selbst bei relativ hohen Kraftstofftemperaturen eine ausreichende Entgasung des Kraftstoffes bewirkt und die eine Wirkungsgradverschlechterung der Kraftstoffpumpe durch in der Ansaugleitung vorhandene Gasbläschen verhindert.

Diese Aufgabe wird mit den kennzeichnenden Merkmalen des Patentanspruches 1 gelöst. Vorteilhafte und zweckmäßige Weiterbildungen der Erfindung sind den Patentansprüchen 2 bis 10 entnehmbar.

Erfindungsgemäß ist an der im Kraftstoffbehälter verlaufenden Ansaugleitung eine Entlüftung vorgesehen, die stromab des Kraftstoffsiebes in einem von der Kraftstoffpumpe ansteigenden, bis zur Entlüftung geschlossenen Leitungsabschnitt angeordnet ist. Dadurch ist sichergestellt, daß stromab des Kraftstoffsiebes ausgasender Kraftstoff zuverlässig über die Entlüftung abgeführt wird, wodurch der der Kraftstoffpumpe benachbarte Ansaugleitungsabschnitt absolut gasblasenfrei gehalten wird.

Durch die Merkmale der Patentansprüche 2 und 3 wird insbesondere die Entgasung während des Betriebes der Kraftstoffpumpe bei strömenden Kraftstoff verbessert. Es hat sich gezeigt, daß eine zuverlässige Ausgasung dann erzielbar ist, wenn sich die Gasbläschen in einem beruhigten Leitungsabschnitt (Stichleitung) sammeln können. Als besonders vorteilhaft hat sich ferner erwiesen, die Strömungsgeschwindigkeit des Kraftstoffes in der Ansaugleitung durch entsprechende Anpassung deren lichten Querschnittes auf den in Patentanspruch 3 angegebenen Bereich abzusenken. Dadurch werden die an der geodätisch am höchsten liegenden Stelle sich sammelnden Gasbläschen nicht durch den strömenden Kraftstoff mitgerissen, sondern können sich unter Bildung einer größeren Gasblase in der Stichleitung ansammeln und dann über die Entlüftung ausgeschieden werden.

Gemäß Patentanspruch 4 ist in die Saugleitung ein Speicherbehälter eingeschaltet, in dem in dem stromaufliegenden Saugleitungsabschnitt sich bildende Gasblasen separiert und über die Absaugleitung und die Strahlpumpe abgezogen werden. Einschlägige Versuche haben dabei gezeigt, daß eine wirkungsvolle Absaugung der Gasblasen ohne Beeinträchtigung des Wirkungsgrades bzw. der Leistung der Kraftstoffpumpe erzielt wird. Die abgesaugten Gasblasen werden zusammen mit dem über die Rücklaufleitung zurückströmenden Kraftstoff in den Kraftstoffbehälter zurückgefördert. Zweckmäßig sollte diese Rückförderung räumlich möglichst weit von der Mündung der Ansaugleitung im Kraftstoffbehälter entfernt liegen.

Eine definierte Ausgasung des erwärmtem Kraftstoffes in dem stromab des Speicherbehälters liegendem Saugleitungsabschnitt wird ferner durch die Merkmale der Patentansprüche 5 und 6 erzielt, mit denen die Strömungsgeschwindigkeit des Kraftstoffes erhöht und/oder dessen Druckenergie vermindert wird. Als Drossel kann dabei vorzugsweise ein an sich bekanntes engmaschiges Ansaugsieb dienen.

Gemäß Patentanspruch 7 kann zumindest ein weiterer Speicherbehälter dem ersten Speicherbehälter nachgeschaltet sein, der ebenfalls eine Absaugleitung für Gasblasen aufweist. Damit werden gegebenenfalls den ersten Speicherbehälter noch passierende Gasblasen nachsepariert bzw. aus der Saugleitung entfernt, so daß; auch bei hohen Kraftstofftemperaturen und entsprechender Ausgasung eine wirkungsvolle Entgasung sichergestellt ist. Es versteht sich, daß gegebenenfalls auch noch weitere Speicherbehälter mit funktionell gleicher Anordnung verwendet sein können. Die Speicherbehälter können baulich hintereinander oder ineinander verschachtelt mit entsprechenden Verbindungsöffnungen angeordnet sein.

Da bei der Verwendung zumindest zweier Speicherbehälter erfahrungsgemäß in dem zweiten Speicherbehälter ein geringerer Anfall an Gasblasen auftritt, kann gemäß Patentanspruch 8 in der weiteren Absaugleitung eine Drosselstelle vorgesehen sein. Diese bewirkt eine stärkere Absaugung im ersten Speicherbehälter und eine geringere Absaugung in dem weiteren Speicherbehälter, wodurch insgesamt die Absaugung verbessert ist. Ferner kann in einer der Absaugleitungen ein Entlüftungsventil gemäß Anspruch 9 vorgesehen sein. Das Entlüftungsventil (Pilzventil) ist im drucklosen Zustand geöffnet und ermöglicht die Ausscheidung von Gasblasen bei Stillstand bzw. ausgeschalteter Kraftstoffpumpe. Bilden sich hier durch die gegebenenfalls noch heiße Kraftstoffpumpe Gasblasen in der Ansaugleitung, so können sie über das geodätisch höherliegende Entlüftungsventil in der Absaugleitung in den Kraftstoffbehälter entweichen.

Gegebenenfalls kann noch entsprechend den Merkmalen des Patentanspruches 11 am pumpenseitigen Austritt des ersten Speicherbehälters ein engmaschiges Sieb eingesetzt sein, welches einem Übertritt von Gasblasen aus dem ersten Speicherbehälter in den weiteren Speicherbehälter entgegenwirkt. Keinesfalls darf aber ein derartiges Sieb stromauf des Entlüftungsventiles angeordnet sein. Die Speicherbehälter und die Saugstrahlpumpe sowie die entsprechenden Verbindungsleitungen können baulich besonders vorteilhaft innerhalb des Kraftstoffbehälters angeordnet sein. Bei erhöhtem Leitungsaufwand ist jedoch auch eine Anordnung außerhalb des Kraftstoffbehälters möglich.

Zwei Ausführungsbeispiele der Erfindung sind im folgenden mit weiteren Einzelheiten näher erläutert. Die schematische Zeichnung zeigt in

Fig. 1 einen Kraftstoffbehälter für ein Kraftfahrzeug mit einer Ansaugleitung mit einem Entlüftungsventil und

Fig. 2 eine in einem Kraftstoffbehälter für Kraftfahrzeuge angeordnete Vorrichtung zum Entgasen von Kraftstoff mit zwei Speicherbehältern und einer Saugstrahlpumpe.

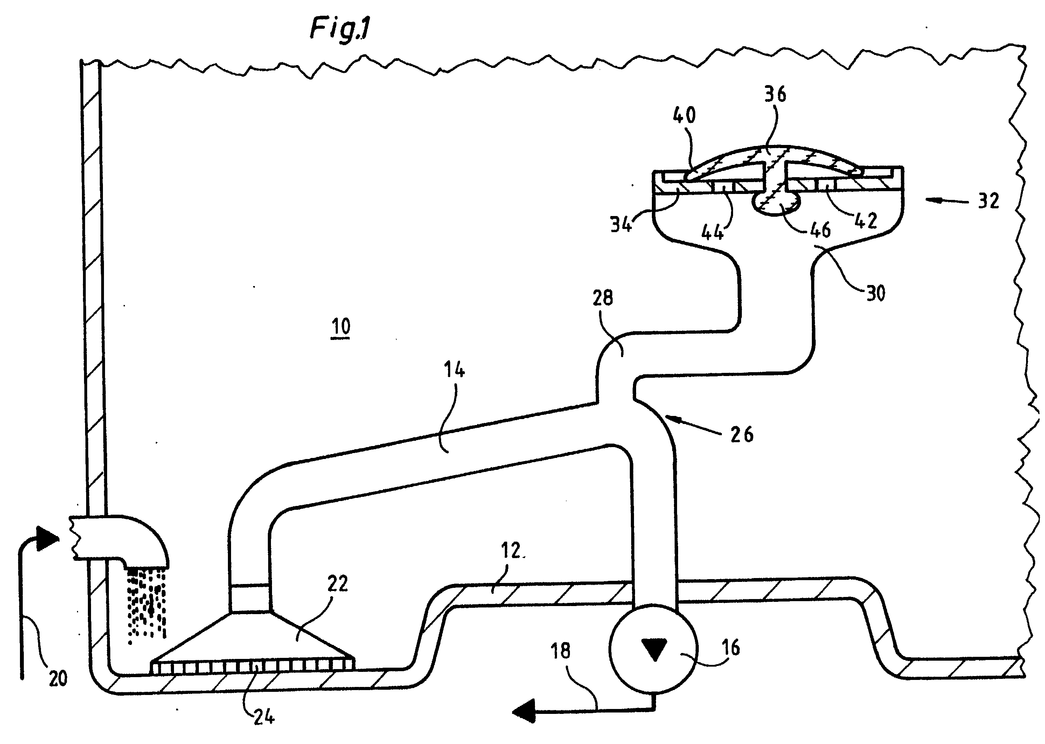

Gemäß Fig. 1 ist in einem nur teilweise dargestellten Kraftstoffbehälter (10) im Bereich des Boden (12) eine metallische Ansaugleitung (14) verlegt, die den Boden (12) des Kraftstoffbehälters durchdringend an eine elektrische Kraftstoffpumpe (16) angeschlossen ist.

Die elektrische Kraftstoffpumpe (16) ist Teil eines Kraftstoffversorgungssystems des Kraftfahrzeuges und fördert über eine Vorlaufleitung (18) Kraftstoff zu einer nicht dargestellten Zumeßeinrichtung der Brennkraftmaschine des Kraftfahrzeuges. Überschüssiger Kraftstoff wird über eine Rücklaufleitung (20) wieder in den Kraftstoffbehälter (10) zurückgeleitet.

Die Ansaugleitung (14) geht vom Boden (12) des Kraftstoffbehälters (10) unter Zwischenschaltung eines Ansaugtrichters (22) mit einem Kraftstoffsieb (24) aus und verläuft ansteigend bis zu einer geodätisch am höchsten liegenden Stelle (26). Dort weist sie eine Krümmung von ca. 100° auf und verläuft nunmehr steil abfallend zur Ansaugseite der Kraftstoffpumpe (16). Dabei ist die Ansaugleitung (14) am Boden (12) des Kraftstoffbehälters (10) befestigt.

An der geodätisch am höchsten liegenden Stelle (26) der Ansaugleitung (14) zweigt eine Stichleitung (28) ab, welche in ein Gehäuse (30) eines insgesamt mit (32) bezeichneten Entlüftungsventiles einmündet. In dem Entlüftungsventil (32) bzw. in dessen oberen Abschlußwand (34) ist ein gummielastischer, pilzförmiger Ventilkörper (36) eingesetzt). Dabei überdeckt die kreisförmige Dichtungslippe (40) des Ventilkörpers (36) Entlüftungsöffnungen (42,44) in der Abschlußwand (34). Gehalten ist der Ventilkörper (36) mittels eines gummielastischen Fortsatzes (46) mit einem verdickten Bereich (siehe Zeichnung) in einer zentralen Bohrung der Abschlußwand (34).

Die Dichtlippe (40) liegt somit nur aufgrund ihres relativ geringen Eigengewichtes mit der Dichtlippe (40) auf der Dichtungsfläche der Abschlußwand (34) an, so daß bei geringsten Auftriebskräften Gasbläschen aus der St ichleitung (28) entweichen können. Andererseits ist ein Rückströmen von Kraftstoff oder Gas aus dem Kraftstoffbehälter (10) in die Stichleitung (28) unterbunden.

Der lichte Querschnitt der Ansaugleitung (14) ist derart auf die eingestellte Förderleistung der Kraftstoffpumpe (16) abgestimmt, daß bei in Betrieb befindlicher Kraftstoffpumpe eine mittlere Strömungsgeschwindigkeit des Kraftstoffes von 0,12 m/sec. in der Ansaugleitung (14) gegeben ist. Bei dieser Strömungsgeschwindigkeit, die abhängig von der Kraftstofftemperatur und anderen Betriebsparametern in einem bestimmten Bereich schwanken kann, werden die in der Ansaugleitung auftretenden Gasbläschen nicht durch die Strömung mitgerissen, sondern in die St ichleitung (28) abgeschieden und durch deren ansteigenden Verlauf aufgrund des Auftriebs der Gasbläschen in das Gehäuse (30) des Entlüftungsventiles und über die Entlüftungsöffnungen (42,44) in den Kraftstoffbehälter (10) ausgeschieden. Desgleichen werden bei Stillstandszeiten der Kraftstoffpumpe (16) gegebenenfalls in der Ansaugleitung (14) noch vorhandene oder sich bildende Gasbläschen zu der geodätisch am höchsten liegenden Stelle (26) aufgetrieben und über das Entlüftungsventil (32) ausgeschieden.

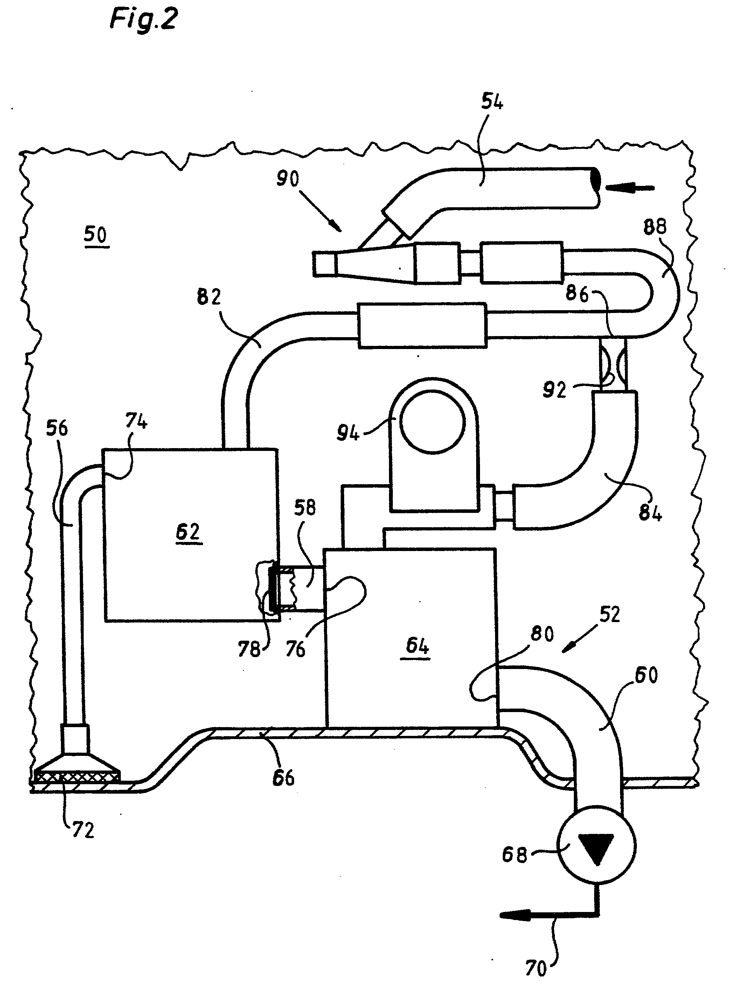

Die Fig. 2 zeigt eine weitere Vorrichtung zum Entgasen des Kraftstoffes in einem nur teilweise dargestellten Kraftstoffbehälter 50 für ein Kraftfahrzeug mit einer Ansaugleitung 52 und einer Rücklaufleitung 54 für Kraftstoff. Die Ansaugleitung 52 setzt sich aus einem Leitungsabschnitt 56, einer Verbindungsleitung 58 und einem Ansaugleitungsabschnitt 60 zusammen, in die ein erster Speicherbehälter 62 und ein weiterer Speicherbehälter 64 eingeschaltet ist. Der Speicherbehälter 64 ist am Boden 66 des Kraftstoffbehälters 50 befestigt.

Der Ansaugleitungsabschnitt 60 ist mit einer elektrischen Kraftstoffpumpe 68 verbunden, über die die nicht dargestellte Brennkraftmaschine beziehungsweise deren Kraftstoffzuführungsystem über die nur angedeutete Vorlaufleitung 70 mit Kraftstoff unter einem definierten Druck versorgt wird. Der von dem Kraftstoffzuführsystem zurückfließende Kraftstoff wird über die Rücklaufleitung 54 wieder in den Kraftstoffbehälter 50 eingeleitet.

Der Ansaugleitungsabschnitt 56 weist in Nähe des Bodens 66 des Kraftstoffbehälters ein trichterförmiges Ansaugsieb 72 mit einer Maschenweite von ca. 30μm auf. Am anderen Ende mündet der Ansaugleitungsabschnitt 56 an einer geodätisch hoch liegenden Stelle 74 in den Speicherbehälter 62. Die beiden Speicherbehälter 62,64 sind durch die Verbindungsleitung 58 miteinander verbunden, wobei der Speicherbehälter 62 derart höhenversetzt angeordnet ist, daß die Verbindungsleitung 58 den Bodenbereich des Speicherbehälters 62 mit der geodätisch hoch liegenden Stelle 76 des Speicherbehälters 64 verbindet. Am pumpenseitigen Austrittsbereich des Speicherbehälters 62 ist an der Verbindungsleitung ein Sieb 78 mit einer Ma-

schenweite von ca. 50μm angeordnet. Der Speicherbehälter 64 ist wiederum in seinem Bodenbereich beziehungsweise der geodätisch tief liegenden Stelle 80 mit dem Ansaugleitungsabschnitt 60 verbunden.

Von den Speicherbehältern 62,64 zweigt jeweils an deren geodätisch am höchsten liegenden Stelle eine Absaugleitung 82 bzw. 84 ab, welche bei 86 zusammengeführt sind und über den gemeinsamen Leitungsabschnitt 88 mit einer im Kraftstoffbehälter angeordneten Saugstrahlpumpe 90 verbunden sind. Die Saugstrahlpumpe 90, die nach Art einer Lavaldüse ausgebildet sein kann, wird von der angeschlossenen Rücklaufleitung 54 betrieben.

In der Absaugleitung 84 ist ferner eine Drossel 92 vorgesehen, die den freien Querschnitt der Ansaugleitung 84 definiert. Des weiteren zweigt von der Absaugleitung 84 ein Entlüftungsventil 94 ab, dessen nicht dargestellter Ventilkörper(vgl. Fig. 1) geodätisch höher als der Speicherbehälter 62 liegt. Der Querschnitt des Ansaugleitungsabschnittes 56 ist wesentlich geringer als der Querschnitt der Verbindungsleitung 58 oder der Querschnitt des Ansaugleitungsabschnittes 60.

Ist die elektrische Kraftstoffpumpe 68 in Betrieb und der Kraftstoff innerhalb des Kraftstoffbehälter auf ca. 40° Celsius erwärmt, so tritt in dem Ansaugleitungsabschnitt 56 aufgrund des Drosselwiderstandes des Ansaugsiebes 72 und der relativ hohen Strömungsgeschwindigkeit des Kraftstoffes eine Ausgasung auf, wobei sich die frei werdenden Gasbläschen im oberen Bereich des Speicherbehälters 62 ansammeln. Ein Mitreißen dieser Gasbläschen durch die Verbindungsleitung 58 in den weiteren Speicherbehälter 64 wird teilweise durch das Sieb 78 unterbunden. Ferner wird eine weitere Ausgasung bewirkt, wobei die noch im Kraftstoff enthaltenen Gasbläschen sich im Speicherbehälter 64 an dessen Oberseite ansammeln. Der elektrischen Kraftstoffpumpe 68 wird somit blasenfreier, entgaster Kraftstoff zugeleitet.

Die in den Speicherbehältern 62,64 befindlichen Gasbläschen werden über die Absaugleitungen 82,84 durch die Saugstrahlpumpe 90 abgesaugt. Die Saugwirkung wird dabei durch den in den Kraftstoffbehälter zurückströmenden Kraftstoff in der Rücklaufleitung 54 erzeugt. Der mit den Bläschen versetzte, zurückströmende Kraftstoff tritt über die Saugstrahlpumpe 90 in den Kraftstoffbehälter 50 aus, wobei die entsprechende Austrittsöffnung räumlich weit von dem Ansaugsieb 72 entfernt liegt. Durch die Drossel 92 wird vermehrt über die Absaugleitung 82 abgesaugt, wodurch der im Speicherbehälter 62 in größerem Maße auftretenden Ausgasung des Kraftstoffes Rechnung getragen wird.

Wird die Brennkraftmaschine abgestellt, wodurch auch die elektrische Kraftstoffpumpe 68 zum Stillstand kommt, so können gegebenenfalls an der erhitzten Kraftstoffpumpe 68 entstehende Gasbläschen über den Ansaugleitungsabschnitt 60 den Speicherbehälter 64, die Absaugleitung 84 und das Entlüftungsventil 94 in den Kraftstoffbehälter 50 entweichen.

Dadurch ist sichergestellt, daß bei einem Wiederstarten der Brennkraftmaschine sofort eine blasenfreie Kraftstoffversorgung erfolgt. Es versteht sich, daß - wie auf der Zeichnung dargestellt - die Kraftstoffpumpe geodätisch tiefer liegen muß und daß die Saugleitung zum Entlüftungsventil hin ansteigend verlegt sein muß.

## Patentansprüche

1. Vorrichtung zum Entgasen von Kraftstoff in einem Kraftstoffbehälter, insbesondere für Kraftfahrzeuge, mit einer Kraftstoffpumpe, die über eine vom Boden des Kraftstoffbehälters ausgehende Ansaugleitung Kraftstoff ansaugt und zu einem Verbraucher fördert, wobei in der Ansaugleitung zumindest ein Kraftstoffsieb und eine geodätisch hoch liegende Entlüftung angeordnet sind, dadurch gekennzeichnet, daß die Entlüftung (32; 94; 42, 44) stromab des Kraftstoffsiebes (24; 72, 78) in einem von der Kraftstoffpumpe (16; 68) ansteigenden, bis zur Entlüftung geschlossenen Leitungsabschnitt (14; 64, 60) angeordnet ist.

2. Vorrichtung nach Anspruch 1, dadurch gekennzeichnet, daß das Entlüftungsventil (32) an einer von der Ansaugleitung (14) abzweigenden, ansteigend verlaufenden Stichleitung (28) angeordnet ist.

3. Vorrichtung nach den Ansprüchen 1 und 2, dadurch gekennzeichnet, daß der lichte Querschnitt der Ansaugleitung (14, 56) zur Pumpenleistung derart abgestimmt ist, daß im Betrieb eine mittlere Kraftstoff-Strömungsgeschwindigkeit von 0,05 bis 0,25 m/sec, insbesondere um 0,12 m/sec., anliegt.

4. Vorrichtung nach einem oder mehreren der Ansprüche 1 – 3, wobei der überschüssige Kraftstoff über eine Kraftstoffrücklaufleitung wieder in den Behälter geleitet wird, gekennzeichnet durch die folgenden Merkmale:
   – in die Saugleitung (52) ist zumindest ein Speicherbehälter (62) eingeschaltet;
   – der pumpenseitige Saugleitungsabschnitt (60) mündet in den Speicherbehälter an einer geodätisch tiefer liegenden Stelle als der behälterseitige Saugleitungsabschnitt (56)
   – in den Speicherbehälter mündet ferner an einer geodätisch hoch liegenden Stelle die Absaugleitung (82);
   – die Absaugleitung (82) ist mit einer Strahlpumpe (90) verbunden;
   – die Strahlpumpe ist von der Kraftstoff-Rücklaufleitung (54) betrieben.

5. Vorrichtung nach Anspruch 4, dadurch gekennzeichnet, daß der behälterseitige Saugleitungsabschnitt (56) einen geringeren freien Querschnitt als der pumpenseitige Saugleitungsabschnitt (60) aufweist.

6. Vorrichtung nach einem oder mehreren der vorhergehenden Ansprüche, dadurch gekennzeichnet, daß; der behälterseitige Saugleitungsabschnitt (56) mit einer querschnittsverengenden Drossel oder mit einem Ansaugsieb (72) mit einer Maschenweite < 150 μm, vorzugsweise um 30 μm, versehen ist.

7. Vorrichtung nach einem oder mehreren der Ansprüche 1 bis 6, dadurch gekennzeichnet, daß

— zumindest ein weiterer Speicherbehälter (64) in die Saugleitung (52) eingeschaltet ist;
— eine Verbindungsleitung (58) von der geodätisch tiefer liegenden Stelle des ersten Speicherbehälters (62) zu einer geodätisch höher liegenden Stelle des zweiten Speicherbehälters (64) führt; und
— zumindest eine weitere geodätisch hoch liegende Absaugleitung (84) mit der ersten Absaugleitung (82) verbunden ist.

8. Vorrichtung nach Anspruch 7, dadurch gekennzeichnet, daß in der weiteren Absaugleitung (84) eine Drosselstelle (92) vorgesehen ist.

9. Vorrichtung nach Anspruch 7, dadurch gekennzeichnet, daß in der Absaugleitung (84) ein zusätzliches Entlüftungsventil (94) angeordnet ist.

10. Vorrichtung nach den Ansprüchen 4 bis 9, dadurch gekennzeichnet, daß am pumpenseitigen Austritt des ersten Speicherbehälters (62) ein engmaschiges Sieb (78) eingesetzt ist.

## Revendications

1. Dispositif de dégazage de carburant dans un réservoir de carburant, en particulier pour des véhicules automobiles, comprenant une pompe de carburant qui aspire du carburant par une conduite d'aspiration issue du fond du réservoir de carburant et le refoule vers un récepteur, au moins un filtre-tamis à carburant et une purge d'air situés en position géodésique haute étant disposés dans la conduite d'aspiration, caractérisé en ce que la purge d'air (32; 94; 42; 44) est disposée en aval du filtre-tamis à carburant (24; 72; 78) dans un tronçon de conduite (14; 64; 60) qui monte à partir de la pompe de carburant (16; 68) et qui est fermé jusqu'à la purge d'air.

2. Dispositif selon la revendication 1, caractérisé en ce que la valve de purge d'air (32) est disposée dans une conduite de dérivation montante (28) qui se raccorde à la conduite d'aspiration (14).

3. Dispositif selon la revendication 1 ou 2, caractérisé en ce que la section transversale intérieure de la conduite d'aspiration (14, 56) est adaptée à la capacité de pompage de telle manière qu'il en résulte en service une vitesse moyenne d'écoulement de carburant de 0,05 à 0,25 m/s, en particulier de 0,12 m/s.

4. Dispositif selon l'une quelconque des revendications 1 à 3, le carburant en excès étant ramené dans le reservoir par une conduite de retour de carburant, caractérisé par les particularités suivantes:
— au moins un récipient d'accumulation (62) est intercalé dans la conduite d'aspiration (52);
— le tronçon de la conduite d'aspiration (60) du côté pompe débouche dans le récipient d'accumulation en un point géodésique situé plus bas que le tronçon de la conduite d'aspiration (56) du côté réservoir;
— dans le récipient d'accumulation débouche en outre la conduite d'aspiration (82) en un point géodésique haut;
— la conduite d'aspiration (82) est raccordée à une pompe à fluide moteur (90);
— la pompe à fluide moteur est actionnée par la conduite de retour de carburant (54).

5. Dispositif selon la revendication 4, caractérisé en ce que le tronçon de la conduite d'aspiration (56) du côté réservoir présente une section transversale intérieure plus petite que le tronçon de la conduite d'aspiration (60) du côté pompe.

6. Dispositif selon l'une quelconque des revendications 1 à 5, caractérisé en ce que le tronçon de la conduite d'aspiration (56) du côté réservoir est muni d'un étranglement qui resserre sa section transversale ou d'un filtre d'aspiration (72) ayant une largeur de mailles < 150 µm, de préférence de l'ordre de 30 µm.

7. Dispositif selon l'une quelconque des revendications 1 à 6, caractérisé en ce que:
— au moins un autre récipient d'accumulation (64) est intercalé dans la conduite d'aspiration (52);
— une conduite de jonction (58) s'étend depuis le point géodésique inférieur du premier récipient d'accumulation (62) jusqu'à un point géodésique supérieur du second récipient d'accumulation (64); et
— au moins une autre conduite d'aspiration (84) en position géodésique haute est raccordée à la première conduite d'aspiration (82).

8. Dispositif selon la revendication 7, caractérisé en ce qu'un point d'étranglement (92) est prévu dans l'autre conduite d'aspiration (84).

9. Dispositif selon la revendication 7, caractérisé en ce qu'une valve de purge d'air supplémentaire (94) est disposée dans la conduite d'aspiration (84).

10. Dispositif selon l'une quelconque des revendications 4 à 9, caractérisé en ce qu'un filtre à mailles étroites (78) est disposé à la sortie du côté pompe du premier récipient d'accumulation (62).

## Claims

1. Device for de-gassing fuel in a fuel tank, especially for motor vehicles, with a fuel pump which draws fuel via an intake line coming from the base of the fuel tank and conveys it to a consumer, at least one fuel strainer and one geodetically elevated vent system being located in the intake line, characterized in that the vent system (32; 94; 42; 44) is located downstream of the fuel strainer (24; 72; 78) in a section of line (14; 64; 60) which rises from the fuel pump (16; 68) and is closed as far as the vent system.

2. Device according to Claim 1, characterized in that the vent valve (32) is located at a stub line (28) which branches from the intake line (14) and runs in an upward direction.

3. Device according to Claims 1 and 2, characterized in that the clear cross-section of the intake line (14, 56) is adapted to suit the pump capacity such that in operation there is an average fuel flow velocity of 0.05 to 0.25 m/sec, in particular about 0.12 m/sec.

4. Device according to one or more of Claims 1–3, in which the excess fuel is conducted back into the tank via a fuel return line, characterized by the following features:
— at least one storage tank (62) is inserted in the suction line (52);

- the pump-side suction line section (60) opens into the storage tank at a geodetically lower point than the tank-side suction line section (56);
- in addition, the draw-off line (82) opens into the storage tank at a geodetically elevated point;
- the draw-off line (82) is connected to a jet pump (90);
- the jet pump is driven by the fuel return line (54).

5. Device according to Claim 4, characterized in that the tank-side suction line section (56) has a lower free cross-section than the pump-side suction line section (60).

6. Device according to one or more of the preceding Claims, characterized in that the tank-side suction line section (56) is provided with a restriction which reduces the cross-section or with an intake strainer (72) with a mesh width < 150 μm preferably about 30 μm.

7. Device according to one or more of Claims 1 to 6, characterized in that
- at least one additional storage tank (64) is inserted in the suction line (52);
- a connecting line (58) leads from the geodetically lower point of the first storage tank (62) to a geodetically higher point of the second storage tank (64); and
- at least one additional geodetically elevated draw-off line (84) is connected to the first draw-off line (82).

8. Device according to Claim 7, characterized in that a restriction point (92) is provided in the additional draw-off line (84);

9. Device according to Claim 7, characterized in that an additional vent valve (94) is located in the draw-off line (84).

10. Device according to Claims 4 to 9, characterized in that a close-meshed strainer (78) is inserted at the pump-side outlet from the first storage tank (62).

# Fig.1

EP 0 302 398 B1

Fig.2